# EUROPEAN PATENT APPLICATION

(11) **EP 0 606 040 A2**
(43) Date of publication of application: **13.07.1994**
(21) Application number: 93500172.7
(22) Date of filing: 29.12.1993
(51) Int. Cl.: B32B 17/10, C03C 17/38

(54) **Double plate made of glass**

(30) Priority: 04.01.1993 ES 9300001
(71) Applicant: CRISTALES CURVADOS S.A., E-08400 Granollers, Barcelona (ES)
(72) Inventor: Figuerola, Gili Fernando, ES-08400 Granollers, Barcelona (ES)
(74) Representative: Alonso Langle, Emilio

(57) **Abstract**

Decorative plate of glass, for windows and vehicle windows, tinted so that the glass incorporated suitable characteristics such as opalescent, smoky or colour efects, etc; and being high resitant to impacts, and made of two films of butyral and a third one of polyester, assembled all of them in a glass plate.

## Description

### OBJECT OF THE INVENTION

The invention refers to a double plate of glass formed by two outer glass plates and three intermediate films, two of them made of butyral and a third one made of polyester or another plastic material forming an assembly constituting a plate - transparent or not - highly resistant to impacts and which can be used for decoration, works, motor vehicle windows, etc.

### BACKGROUND OF THE INVENTION

The glass plates used until now for decoration, works and motor vehicles are usually formed by two glass plates of 6 mm thickness which are joint between them by means of an intermediate butyral plate or film applying heat and pressure.

These glass plates so manufactured offer a high resistance to impacts of stones, shocks, etc and, therefore, are widely used. However, they pose a weight problem due to the significant thickness of the glass plates and the limited resistance to impacts.

### DESCRIPTION OF THE INVENTION

The glass plate described herein has been conceived to fully solve these problems offering a structure based on the use of two glass plates and two butyral films but incorporating a third polyester film - for instance - so that the combination of polyester and butyral and the relevant glasses enables to obtain a plate whose resistance to impacts is much higher than the conventional one and enables the use of glass plates with a thickness smaller than that of the conventional ones. It is possible to use plates of 4 mm thickness instead of 6 mm thick conventional plates thus notably reducing the weight of the assembly.

As usual, the glass can be tinted, be adequately treated etc, although the most convenient thing in terms of facility and savings is to tint the polyester plate in bulk thus conferring different colours to the assembly. Undoubtedly, butyral can also be tinted so that the glass incorporates suitable characteristics such as opalescent, smoky, coloured or spectacular effects of partial reflection of light or filtering.

The most significant advantages of the structure of the compound glass plate which is the object of this invention can be summarized as follows:
. Significant manufacturing savings compared with the traditional plates used for the same purposes.
. A better performance.
. Significant decrease in weight (one third) compared with the conventional plates as glass plates of 4 mm thick can be used instead of plates of 6 mm needed for glass plates to assemble conventional plates.
. A more simple structure and manufacturing cots.
. Due to the difference in weight and thickness compared with a conventional glass plate when used for motor vehicle windows, it will be more practical in all respects both from an assembling and handling point of views, etc.

### DESCRIPTION OF THE DRAWINGS

To complement this description and in an effort to better understand the main characteristics of the invention, a set of drawings is attached to this descriptive report forming an integral part of it and where, as an illustration and without limitation, the following has been represented:

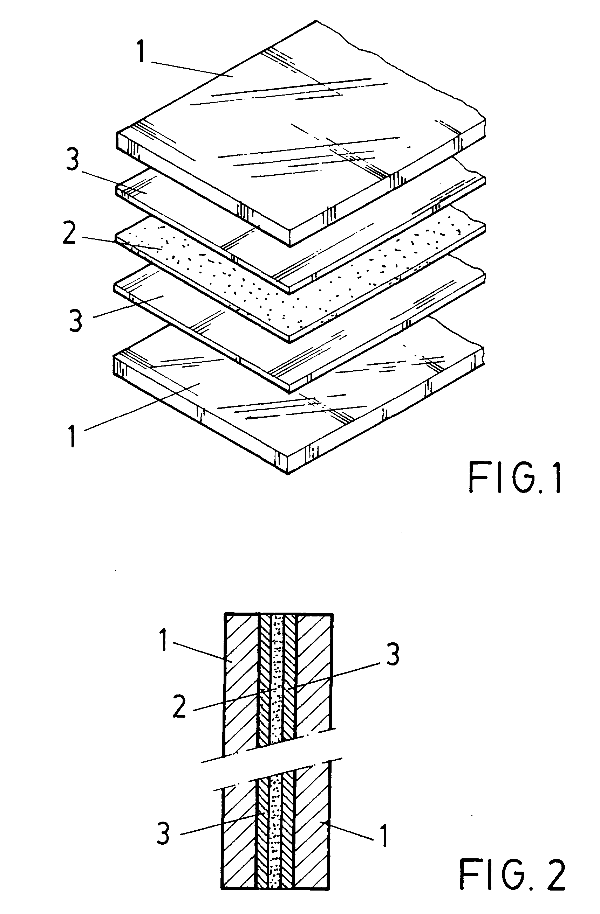

Figure 1.- It shows a general perspective view of the different pieces or parts that form the compound glass plate which is the object of this invention.

Figure 2.- It shows a cross-section view of the compound glass plate obtained by means of the elements represented in the previous figure.

### PREFERRED EXECUTION OF THE INVENTION

As shown in the figures described above, the compound glass plate preconized is formed by two identical glass plates (1) transparent and with a thickness of 4 mm instead of the 6 mm of the conventional glass plates used to obtain compound plates to be used, for instance, in motor vehicle windows, decoration plates, etc.

In any case, between these two glass plates (1) there are another three plates (2) and (3) of a notably smaller thickness being the film (2) of polyester or any other plastic material, while the films (3) are of butyral.

Pressure and heat are applied to the layers formed by these five plates or pieces to achieve a fixing highly resistant to impacts and of a notably smaller thickness compared with the conventional plates used for the same purposes.

It goes without saying that according to the intended use of the plate, the glass plates (1) can undergo different treatments, pigmentations or tinctures, etc. while the films (2) or (3) can also be tinted so that the plate assembly shows the desired appearance without the need to apply any treatment or tincture to the outer glass plates (1). Therefore it is much easier, cheaper and more advantageous to tint or treat any of these films of polyester or any other plastic material (2) or butyral (3).

It is not the intention to describe further this invention since any expert on the subject will be able to understand it easily on the basis of the information provided to appreciate the scope of this invention and its advantages and to reproduce it.

It is understood that, provided that the essentials of this invention are not altered, any variations in the materials or in the shape, size and layout of the elements can be introduced.

The terms used in this description as well as their meaning should always be considered as non-limitative.

## Claims

**1.-** A double plate of glass intended to be used for decoration, works, motor vehicle windows, etc., which can incorporate any colour, tincture or treatment to confer to the assembly opalescent, smoky or other spectacular characteristics while offering a high resistance to impacts of stones, shocks, etc. It is basically formed by two glass plates and between them a butyral film and another polyester film. It is essentially characterized because it also incorporates a second butyral film arranged so that the polyester film is inserted between both butyral films forming the three of them and the glass plates themselves a closely joint layer with the five plates. It is foreseen that the two outer glass plates have a maximum thickness of 4 mm.
